# EUROPÄISCHE PATENTANMELDUNG

(11) **EP 1 439 029 A1**
(43) Veröffentlichungstag der Anmeldung: **21.07.2004**
(21) Anmeldenummer: 03014984.3
(22) Anmeldetag: 02.07.2003
(51) Int. Cl.: B23Q 39/02, B23Q 3/157, B23Q 1/01, B23Q 1/62, B23Q 11/08

(54) **Mehrspindelbearbeitungszentrum**

(30) Priorität: 10.12.2002 DE 10257533
(71) Anmelder: EMAG MASCHINENFABRIK GMBH, D-73084 Salach (DE)
(72) Erfinder: Hessbrüggen, Norbert, 73084 Salach (DE); Walz, Jürgen, 72636 Frickenhausen (DE)

(57) **Zusammenfassung**

Die Erfindung betrifft eine Werkzeugmaschine, insbesondere ein selbstladendes Bearbeitungszentrum mit mehreren Arbeitseinheiten (15,16) und einer automatischen Werkzeugwechselvorrichtung (14,21) zur beschleunigten Bearbeitung von Werkstücken. Dabei werden die Transportvorrichtung mit dem Aufnahmebereich (12) für die Werkstücke und das Werkzeugmagazin (14) mit Wechselpositionen für die Arbeitseinheiten (15,16) in unmittelbarer Nähe zu den Bearbeitungsvorrichtungen (15,16) angeordnet werden. Auf diese Weise lässt sich die Summe der Verfahrwege für Werkstück- und Werkzeugwechsel deutlich verkürzen, wodurch eine erhebliche Zeitersparnis bei der Bearbeitung der Werkstücke realisiert werden kann.

## Beschreibung

Die Erfindung betrifft eine Werkzeugmaschine, insbesondere ein selbstladendes Bearbeitungszentrum mit mehreren Arbeitseinheiten und einer automatischen Werkzeugwechselvorrichtung.

### [Stand der Technik]

Ein derartiges Bearbeitungszentrum mit zwei antreibbaren Arbeitsspindeln ist beispielsweise in der EP 0 806 998 B1 beschrieben. Die Arbeitsspindeln sind dabei parallel zur ihrer Rotationsachse in horizontaler Richtung verschiebbar angeordnet. Zusätzlich ist jede Arbeitsspindel in vertikaler Richtung verfahrbar. Die Werkstückbearbeitung erfolgt durch den alternierenden Einsatz der beiden Arbeitsspindeln. Zum Wechseln der Werkzeuge werden die Arbeitspindeln hinter das Werkzeugmagazin gefahren, um durch einfaches Vorfahren das in der Wechselposition befindliche Werkzeug zu übernehmen. Das in großer Höhe angeordnete Werkzeugmagazin kann zur leichteren Bestückung um eine Schwenkachse in eine niedrigere Position geschwenkt werden. Konstruktionsbedingt muss zwischen Werkstückträger und Werkzeugmagazin ausreichend Raum vorgesehen sein, damit auch größere Werkstücke bearbeitet werden können. Die zum Werkzeugwechsel erforderliche vertikale Bewegung der Arbeitsspindeln ist demgemäß abhängig von der Höhe des größten zu bearbeitenden Werkstücks. Dadurch verlängert sich bei allen kleineren Werkstücken die für den Werkzeugwechsel erforderliche Zeit, was bei kurzen Bearbeitungsschritten besonders nachteilig ist.

Aus der EP 0 767 721 B1 ist ein weiteres Bearbeitungszentrum in Konsolbauweise mit mehreren Arbeitseinheiten bekannt. Zur Verkürzung der Nebenzeiten sind die Werkstücke in einer Palette mittels Spannvorrichtung gehalten und werden von einem Werkstückträger positioniert. Eine Anordnung für ein Werkzeugmagazin zur Bestückung der beiden Arbeitseinheiten ist jedoch nicht offenbart. Außerdem wird durch die Konsolbauweise und die einseitige Führung der Werkstückspindel die Steifigkeit der Maschine nachteilig beeinflusst.

### [Aufgabe der Erfindung]

Die Aufgabe der Erfindung ist es, für ein Bearbeitungszentrum der gattungsgemäßen Art die Taktzeit für die Bearbeitung der Werkstücke zu verkürzen.

### [Beispiele]

Die Aufgabe wird gelöst durch ein Bearbeitungszentrum nach Anspruch 1.

Die Erfindung geht von der Erkenntnis aus, dass sich die Zeit für die Bearbeitung der Werkstücke vorteilhaft dadurch verkürzen lässt, dass sowohl die Transportvorrichtung mit dem Aufnahmebereich für die Werkstücke als auch das Werkzeugmagazin mit Wechselpositionen für die Arbeitseinheiten in unmittelbarer Nähe zu den Bearbeitungsvorrichtungen angeordnet werden. Auf diese Weise lässt sich die Summe der Verfahrwege für Werkstück- und Werkzeugwechsel deutlich verkürzen, wodurch eine erhebliche Zeitersparnis bei der Bearbeitung der Werkstücke realisiert werden kann.

Bei einem erfindungsgemäßen Bearbeitungszentrum sind eine Transporteinrichtung, eine Aufnahmevorrichtung und mindestens zwei Bearbeitungsvorrichtungen vorgesehen, denen das Werkstück nacheinander zugeführt wird. Die Aufnahmevorrichtung, bestehend aus einer Werkstückspindel mit einem Spannfutter ist an einem Kreuzschlitten angeordnet. Die Werkstückspindel arbeitet nach dem Pick-up-Prinzip und kann um eine Schwenkachse (C), vorzugsweise rechtwinklig zu den beiden Bewegungsrichtungen des Kreuzschlittens, geschwenkt werden.

Für die Bearbeitung des Werkstücks sind die in den Bearbeitungszentren typischen Werkzeuge in vorgesehen, z.B. zum Drehen, Fräsen, Bohren, Schleifen etc. Die Werkzeuge werden in einem Werkzeugmagazin bereitgestellt, aus dem sie bei Bedarf entnommen und mittels eines Werkzeugwechslers in die jeweilige Bearbeitungsvorrichtung eingewechselt werden.

Bei einer vorteilhaften Ausführung der Erfindung ist im Werkzeugmagazin eine endlose Kette vorgesehen, welche im Wechselbereich in unmittelbarer Nähe an beiden Bearbeitungsvorrichtungen vorbeigeführt wird. Zum Austauschen der Werkzeuge wird die jeweilige Bearbeitungsvorrichtung in einen Wechselbereich bewegt. Dort greift ein Werkzeugwechsler, vorzugsweise ein Doppelgreifer, die beiden aus- und einzuwechselnden Werkzeuge und tauscht sie gegeneinander aus. Nach einer besonders vorteilhaften Ausführung wird die Bearbeitungsvorrichtung in einer Richtung parallel zu ihrer Rotationsachse bewegt. Dabei ist der erforderliche Verfahrweg nicht mehr von der Länge des größten zu bearbeitenden Werkstücks abhängig und kann gegenüber dem Stand der Technik deutlich kürzer ausfallen.

Gemäß einer weiteren Ausführung der Erfindung ist jeder Bearbeitungsvorrichtung ein separates Werkzeugmagazin zugeordnet. Vorzugsweise sind Scheibenmagazine vorgesehen, welche seitlich neben den Bearbeitungsvorrichtungen parallel zu ihrer Rotationsachse angeordnet sind. Eine besonders platzsparende Anordnung wird dadurch ermöglicht, dass zum Werkzeugwechsel eine Schwenkvorrichtung das aus dem Magazin zu entnehmende Werkzeug um 90° schwenkt und ein Werkzeugwechsler, vorzugsweise ein Doppelgreifer, das Werkzeug der Bearbeitungsvorrichtung gegen das in der Schwenkvorrichtung bereitgestellte Werkzeug austauscht.

Bei einem erfindungsgemäßen Bearbeitungszentrum wird die Transportvorrichtung für die Werkstücke seitlich in räumlicher Nähe zu den Bearbeitungsvorrichtungen geführt. Daraus ergeben sich sehr kurze Transportwege für die Werkstücke. Da auch die beiden Bearbeitungsvorrichtungen eng nebeneinander angeordnet sind, resultieren für den gesamten Bearbeitungszyklus extrem kurze Verfahrwege. Zudem sind die beiden Bearbeitungsvorrichtungen wechselweise im Einsatz, das heißt, während die eine Bearbeitungseinheit das Werkstück bearbeitet, kann die an der im Wechselbereich ein neues Werkstück aufnehmen. So lassen sich mit dem erfindungsgemäßen Bearbeitungszentrum die Nebenzeiten, in denen keine Bearbeitung erfolgt, optimieren und innerhalb kürzester Taktzeiten mehrere unterschiedliche Bearbeitungsoperationen an einem Werkstück nacheinander durchführen.

Nachfolgend wird die Erfindung an Hand von Figuren näher erläutert.
- Fig. 1: zeigt einen schematischen Querschnitt des erfindungsgemäßen Bearbeitungszentrums
- Fig. 2: zeigt einen Längsschnitt des Bearbeitungszentrums
- Fig. 3: zeigt eine Modifikation des Bearbeitungszentrums

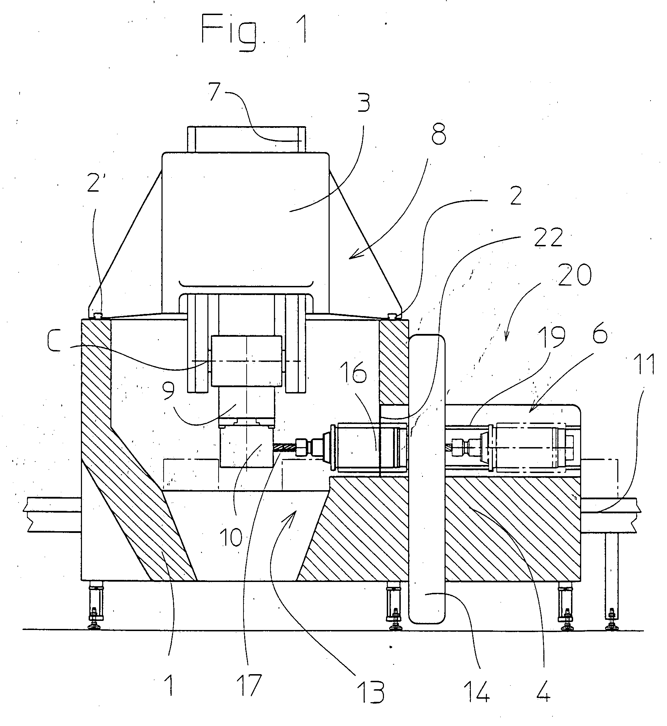

In Fig. 1 zeigt den Querschnitt eines Bearbeitungszentrums. Es ist ein Grundkörper 1 mit Führungsbahnen 2 und 2' dargestellt. Der Kreuzschlitten 3 ist entlang der Führungsbahnen 2, 2' bewegbar. Am Kreuzschlitten 3 befinden sich Führungsbahnen 7, auf welchen die Aufnahmevorrichtung 8 mit der Werkstückspindel 5 geführt ist. Der Kreuzschlitten 3 und die Werkstückspindel 5 sind mittels nicht dargestellter Antriebe, beispielsweise mit Linearantrieben, längs ihrer Führungsbahnen bewegbar. Am unteren Ende der Werkstückspindel 5 befindet sich das Futter 9, welches zum Greifen und Spannen von Werkstücken 10 geeignet ist. Die Werkstückspindel 5 kann um die Schwenkachse C geschwenkt werden. Die Arbeitseinheit 16 mit dem Werkzeug 17 kann aus dem Bearbeitungsbereich 13 in einen Wechselbereich 20 bewegt werden. Im Wechselbereich 20 mit der Wechselposition 6 ist der Grundkörper 1 durch ein Tragelement 4 erweitert. Der Wechselbereich 20 kann durch einen Schmutzabweiser 22 gegen Verunreinigungen aus dem Bearbeitungsbereich 13 abgeschirmt werden.
Für die Bearbeitung der Werkstücke 10 sind im Werkzeugmagazin 14 eine Vielzahl unterschiedlicher Werkzeuge für die in Bearbeitungszentren typischen Arbeitsschritte wie Drehen, Fräsen, Bohren, Gewindeschneiden, Senken, Schleifen etc. bereitgehalten.
Die Transportvorrichtung 11 dient zum Transport der Werkstücke 10. Sie transportiert die unbearbeiteten Werkstücke in den Aufnahmebereich 12 hinein und die bearbeiteten Werkstücke aus dem Abgabebereich heraus, wobei Auf- und Abgabebereich vorzugsweise zusammenfallen.

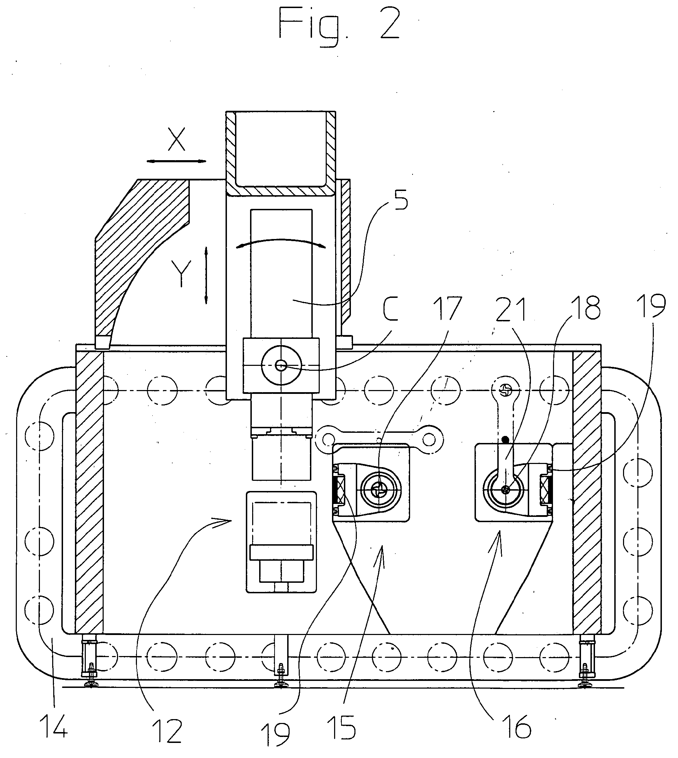

Fig. 2 zeigt einen Längsschnitt des Bearbeitungszentrums. Ein Bearbeitungszyklus beginnt mit der Entnahme eines Werkstücks 10 im Aufnahmebereich 12 von der Transporteinrichtung 11. Die Aufnahmeeinheit transportiert das Werkstück in den Bearbeitungsbereich 13. Dort gelangt das Werkstück zunächst in den Wirkbereich der Bearbeitungsvorrichtung 15 und durch Relativbewegungen zischen der Aufnahmevorrichtung 8 und der Bearbeitungsvorrichtung 16 vom Werkzeug 17 bearbeitet. Dabei führt die Aufnahmevorrichtung 8 vorzugsweise entlang der Führungsbahnen 2, 2' und/oder 7 die Vorschubbewegungen aus und die Zustellbewegung erfolgt durch Verfahren der Bearbeitungsvorrichtung entlang der Führungsbahn 19.
Die Bearbeitungsvorrichtung 16 befindet sich nach Fig. 2 in der Wechselposition. Der Werkzeugwechsler 21, vorzugsweise ein Doppelgreifer, ergreift das Werkzeug 18 und tauscht dieses durch ein anderes aus dem Werkzeugmagazin 14 aus. Nach erfolgtem Werkzeugwechsel und nach Beenden des Bearbeitungsschrittes durch die Bearbeitungsvorrichtung 15 bewegt die Aufnahmevorrichtung 8 das Werkstück 10 in den Wirkbereich der Bearbeitungsvorrichtung 16. Die Bearbeitung erfolgt anlog. Nach erfolgtem Werkzeugwechsel in der Bearbeitungsvorrichtung 15 und nach Beenden des Bearbeitungsschrittes durch die Bearbeitungsvorrichtung 16 bewegt die Aufnahmevorrichtung 8 das Werkstück 10 in den Wirkbereich der Bearbeitungsvorrichtung 15 zurück. Das Werkstück 10 wird auf diese Weise abwechselnd in den beiden Bearbeitungsvorrichtungen bearbeitet, bis alle Bearbeitungsschritte ausgeführt sind. Anschließend wird das Werkstück im Abgabebereich auf die Transporteinrichtung 11 abgelegt.

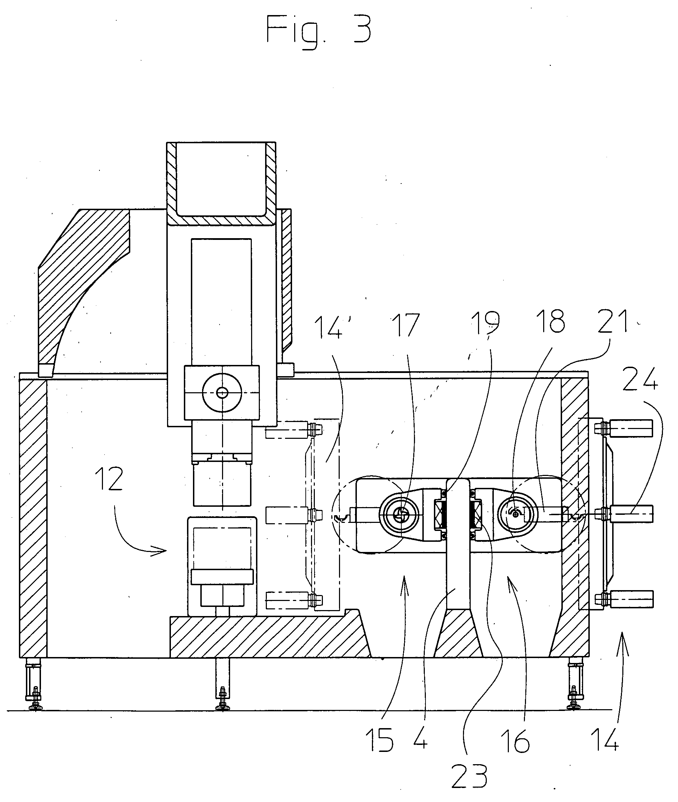

Fig. 3 zeigt einen Längsschnitt des Bearbeitungszentrums in modifizierter Form. Die Bearbeitungsvorrichtungen 15 und 16 sind auf den gegenüberliegenden Seiten des Tragelements 4 angeordnet. Für jede der beiden Bearbeitungsvorrichtungen sind separate Scheibenmagazine 14, 14' vorgesehen, welche seitlich neben den Bearbeitungsvorrichtungen 15 und 16 parallel zu deren Rotationsachsen angeordnet sind. Zum Werkzeugwechsel schwenkt eine nicht dargestellte Schwenkvorrichtung das aus dem Magazin zu entnehmende Werkzeug 24 um 90° und der Doppelgreifer 21 tauscht das Werkzeug 18 der Bearbeitungsvorrichtung 16 gegen das in der Schwenkvorrichtung bereitgestellte Werkzeug 24 aus.

Nach einer vorteilhaften Ausführung werden die Bearbeitungsvorrichtungen 15, 16 von Linearantriebe 23 bewegt, die zischen den Führungsbahnen 19 angeordnet sind.

Durch die räumlich kompakte Anordnung von Aufnahmebereich 12, Bearbeitungsvorrichtungen 15, 16 und Wechselbereich 20 kann die Summe der Verfahrwege für Werkstück- und Werkzeugwechsel deutlich verkürzt werden und in Kombination mit der wechselweisen Werkstückbearbeitung durch die Bearbeitungsvorrichtungen 15, 16 lässt eine erhebliche Zeitersparnis für die Zykluszeit realisieren.

### [Bezugszeichenliste]

### Bezugszeichenliste

- 1: Grundkörper
- 2, 2': Führungsbahn
- 3: Kreuzschlitten
- 4: Tragelement
- 5: Werkstückspindel
- 6: Wechselposition
- 7: Führungsbahn
- 8: Aufnahmevorrichtung
- 9: Spannfutter
- 10: Werkstück
- 11: Transportvorrichtung
- 12: Aufnahmebereich
- 13: Bearbeitungsbereich
- 14, 14': Werkzeugmagazin
- 15: Bearbeitungsvorrichtung
- 16: Bearbeitungsvorrichtung
- 17: Werkzeug
- 18: Werkzeug
- 19: Führungsbahn
- 20: Wechselbereich
- 21: Werkzeugwechsler
- 22: Schmutzabweiser
- 23: Linearantrieb
- 24: Werkzeug
- C: Schwenkachse

## Patentansprüche

1. Bearbeitungszentrum zur mechanischen Bearbeitung von Werkstücken
a) mit einer Aufnahmevorrichtung (8) zur Aufnahme eines Werkstücks (10) aus einem Aufnahmebereich (12),
b) mit wenigstens zwei Bearbeitungsvorrichtungen (15, 16) zur Aufnahme von Werkzeugen (17, 18),
c) wobei die Aufnahmevorrichtung (8) vom Aufnahmebereich (12) entlang von Führungsbahnen (2) in einen Bearbeitungsbereich (13) verfahrbar ist,
d) wobei die Aufnahmevorrichtung (8) im wesentlichen zwischen den Führungsbahnen (2, 2') angeordnet ist,
e) wobei die Aufnahmevorrichtung (8) und die Bearbeitungsvorrichtungen (15, 16) über Antriebe relativ zueinander so bewegbar sind, dass das Werkstück (10) in die Wirkbereiche der Werkzeuge (17, 18) gelangt,
f) wobei die Bearbeitungsvorrichtungen (15, 16) in einer Bewegungsrichtung parallel zu ihrer Rotationsachse aus dem Bearbeitungsbereich (13) in einen Wechselbereich (20) bewegt werden können.

2. Bearbeitungszentrum nach Anspruch 1, **dadurch gekennzeichnet, dass** die Aufnahmevorrichtung (8) für die Aufnahme des Werkstücks (10) eine mit einem Spannfutter (9) versehene Aufnahmeeinheit, insbesondere eine Werkstückspindel (5) aufweist.

3. Bearbeitungszentrum nach Anspruch 1 oder 2, **dadurch gekennzeichnet, dass** die Aufnahmevorrichtung (8) entlang von Führungsbahnen (2) und (7) bewegbar ist, welche vorzugsweise senkrecht zueinander ausgerichtet sind.

4. Bearbeitungszentrum nach Anspruch 3, **dadurch gekennzeichnet, dass** die Werkstückspindel (5) um eine Schwenkachse (C), vorzugsweise rechtwinklig zur Bewegungsrichtung entlang der Führungsbahnen (2) und (7), geschwenkt werden kann.

5. Bearbeitungszentrum nach einem der Ansprüche 3 oder 4, **dadurch gekennzeichnet, dass** die Aufnahmevorrichtung (8) zur Ausführung einer Vorschubbewegung in Richtung der Führungsbahnen (2 und/oder 7) ausgebildet ist.

6. Bearbeitungszentrum nach einem der Ansprüche 1 bis 5, **dadurch gekennzeichnet, dass** Bearbeitungsvorrichtungen (15, 16) zur Ausführung von Zustellbewegungen entlang von Führungsbahnen (19) bewegbar sind.

7. Bearbeitungszentrum nach Anspruch 6, **dadurch gekennzeichnet, dass** ein Tragelement (4) zur Aufnahme der Führungsbahnen (19) sich vom Wechselbereich (20) bis zum Bearbeitungsbereich (13) erstreckt.

8. Bearbeitungszentrum nach Anspruch 7, **dadurch gekennzeichnet, dass** das Tragelement (4) verwindungssteif und/oder einstückig mit dem Grundkörper verbunden ist.

9. Bearbeitungszentrum nach Anspruch 8, **dadurch gekennzeichnet, dass** die Führungsbahnen (19) für die Bearbeitungsvorrichtungen (15, 16) sich außerhalb des Bearbeitungsbereichs (13) befinden.

10. Bearbeitungszentrum nach einem der Ansprüche 6 bis 9, **dadurch gekennzeichnet, dass** die Bearbeitungsvorrichtungen (15, 16) im Wechselbereich (20) gegen Verunreinigungen aus dem Bearbeitungsbereich (13) abgeschirmt werden können.

11. Bearbeitungszentrum nach einem der Ansprüche 6 bis 10, **dadurch gekennzeichnet, dass** die Verbindung zwischen Wechselbereich (20) und Bearbeitungsbereich (13) durch einen Schmutzabweiser (22) verschlossen werden kann.

12. Bearbeitungszentrum nach einem der Ansprüche 8 bis 11, **dadurch gekennzeichnet, dass** die Bearbeitungsvorrichtungen (15, 16) mit ihren Führungsbahnen (19) auf den gegenüberliegenden Seiten eines Tragelements (4) angeordnet sind.

13. Bearbeitungszentrum nach einem der Ansprüche 1 bis 12, **dadurch gekennzeichnet, dass** zum Austausch der in den Bearbeitungsvorrichtungen (15, 16) gehaltenen Werkzeuge (17, 18) mindestens ein Werkzeugmagazin (14) vorgesehen ist.

14. Bearbeitungszentrum nach einem der Ansprüche 1 bis 13, **dadurch gekennzeichnet, dass** jeder der mindestens zwei Bearbeitungsvorrichtungen (15, 16) je ein Werkzeugmagazin (14, 14') zum Austausch der Werkzeuge (17, 18) zugeordnet ist.

15. Bearbeitungszentrum nach Anspruch 13 oder 14, **dadurch gekennzeichnet, dass** ein Werkzeugwechsler (21) zum Austausch der in den Bearbeitungsvorrichtungen (15, 16) gehaltenen Werkzeuge (17, 18) vorgesehen ist.

16. Bearbeitungszentrum nach einem der Ansprüche 8 bis 22 , **dadurch gekennzeichnet, dass** wenigstens eine Transportvorrichtung (11) vorgesehen ist, welche die zu bearbeitenden Werkstücke (10) in den Aufnahmebereich (12) fördert und die bearbeiteten Werkstücke aus einem Abgabebereich abführt, wobei Aufnahme- und Abgabebereich identisch sein können.
